# EUROPEAN PATENT SPECIFICATION

(11) **EP 2 390 812 B1**
(45) Date of publication and mention of the grant of the patent: **20.07.2016**
(21) Application number: 11166591.5
(22) Date of filing: 18.05.2011
(51) Int. Cl.: G06F 21/62, G06F 3/0488

(54) **Method and apparatus for controlling objects of a user interface**
Verfahren und Vorrichtung zum Steuern von Objekten einer Benutzerschnittstelle
Method and apparatus for controlling objects of a user interface

(30) Priority: 24.05.2010 KR 20100048085
(43) Date of publication of application: 30.11.2011
(73) Proprietor: Samsung Electronics Co., Ltd., Suwon-si, Gyeonggi-do, 443-742 (KR)
(72) Inventor: Kim, Jung-a, Gyeonggi-do (KR); Kim, Yoo-tai, Gyeonggi-do (KR); Lee, Dong-heon, Seoul (KR); Seong, Hye-young, Gyeonggi-do (KR)
(74) Representative: Appleyard Lees IP LLP

(56) References cited:
- WO-A1-00/72200
- US-A1- 2006 294 599
- US-A1- 2008 278 455

## Description

### BACKGROUND

### Field

Apparatuses and methods consistent with the exemplary embodiments relate to a method and apparatus for controlling objects of a user interface, and more particularly, to a method and apparatus for controlling objects of a user interface which, when an object is encrypted, simultaneously hides and moves an object to a bottom of a user interface.

### DESCRIPTION OF RELATED ART

Protection of personal information and/or confidential business documents has become an important issue. Accordingly, various types of user authentication schemes and encryption methods are suggested by the related art. Generally, a method for encryption involves a user inputting a password.

A user may establish encryption by inputting a password through an input device, such as a touch screen or a key input button.

In order to indicate that a document is encrypted, a mark may be used. For example, encrypted files, directories, or folders may be distinguished using a lock, a star, a changed color, etc.

Generally, encrypted files, directories, or folder may be accessed by inputting a password for decryption. Accordingly, a third person who is not aware of the password, is limited in attempting to access an encrypted file, but is able to distinguish an encrypted document from a document which is not encrypted.

Patent document US2006294599 discloses a method to allow a user to select user interface items to be hidden and displayed again.

Patent document US2008278455 discloses a method to associate touch screen gestures freely with various functions of the touch screen device without temporal or spatial indication of the gesture related protocol.

Patent document WO0072200 discloses a password protected file system driver method for hiding the existence of selected files.

A user guide for Folder Guard program available from a web address https://web.archive.org/web/20091211215309/http:// www.winability.com/folderguard/users-guide-printable.htm discloses a method to select files and folders to be hidden in a Windows TM environment.

### SUMMARY

The invention is defined as specified by the appended independent claims.

One or more exemplary embodiments provide a method and an apparatus which simultaneously hide an object and rearrange remaining objects displayed in a user interface (UI) when the object is encrypted, so that the encrypted object is not visually exposed to a third person, and encrypted objects are displayed through the UI, on a screen, directory, or folder.

According to an aspect of an exemplary embodiment, there is provided a method of controlling an object including: displaying a UI including at least one display region having at least one object; receiving selected input of a target object from a user and displaying a control menu; receiving input of a control instruction from the user; and hiding the target object and rearranging remaining objects positioned in the display region.

The control instruction may include a gesture.

The gesture may include at least one of a flick, a dragging, a click, a tag, a touch, and a touch and hold.

The object may include at least one of an icon, a content, a list, and a bar.

The rearranging of the object positioned in the display region may include moving the target object to a previously displayed region of the UI.

According to an aspect of another exemplary embodiment, there is provided a method of controlling an object including: displaying a UI including at least one display region having at least one object; receiving input of a control instruction regarding a target object hidden from a user; performing authentication with respect to displaying the target object; and displaying the target object in a selected display region.

The authentication may be performed using at least one of a fingerprint of the user, a password, and a certificate.

The control instruction may include a gesture.

The gesture may include at least one of a flick, a dragging, a click, a tag, a touch, and a touch and hold.

The selected display region may be a previously displayed region of the UI, and the gesture may be a flick on a portion of the previously displayed region or a touch on the portion for a predetermined period of time.

The for According to an aspect of another exemplary embodiment, there is provided an apparatus for controlling an object including: a display controller which displays a UI including at least one display region having at least one object, and displaying a control menu corresponding to selected input of a target object input from a user; and an object controller which hides the target object corresponding to a control instruction input from the user, and rearranges the remaining objects in the display region.

The control instruction may include a gesture.

The gesture may include at least one of a flick, a dragging, a click, a tag, a touch, and a touch and hold.

The object may include at least one of an icon, a content, a list, and a bar.

The object controller may move the target object to a previously displayed region of the UI.

According to an aspect of another exemplary embodiment, there is provided an apparatus for controlling an object including: a display controller which displays a UI including at least one display region having at least one object; an object controller which receives a control instruction on a target object hidden from a user, and controls exposure of the target object; an authentication unit which performs authentication with respect to the exposure of the target object; and an object implementation unit which implements the target object, the object controller controlling the target object to be displayed in a selected display region based on an authentication result by the authentication unit.

The authentication may be performed using at least one of a fingerprint, a password, and a certificate.

The control instruction may include a gesture.

The gesture may include at least one of a flick, a dragging, a click, a tag, a touch, and a touch and hold.

The selected display region may be a previously displayed region of the UI, and the gesture may be a flick on a portion of the previously displayed region or a touch on the portion of the previously displayed region for a predetermined period of time.

According to an aspect of another exemplary embodiment, there is provided a non-transitory computer-readable medium comprising a program for instructing a computer to perform at least one of the above described methods.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a block diagram of an object control apparatus according to an exemplary embodiment;
FIG. 2 illustrates an example of a method of controlling an object in an icon displayed in a UI;
FIG. 3 illustrates an example of a method of controlling an object in a bar displayed in a UI;
FIG. 4 is a flowchart illustrating a method of encrypting an object according to an exemplary embodiment; and
FIG. 5 is a flowchart illustrating a method of implementing an encrypted object according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

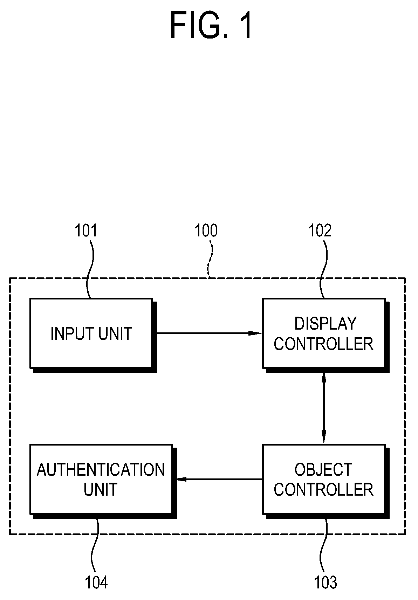

FIG. 1 is a block diagram of an object control apparatus according to an exemplary embodiment.

Referring to FIG. 1, the object control apparatus 100 according to the present embodiment includes an input unit 101, a display controller 102, an object controller 103, and an authentication unit 104.

The input unit 101 may use various devices, such as a keypad, a touch screen, and the like, and receives from a user, a control instruction based on selected input of a function or information desired by a user.

The control instruction may be a gesture input by the user, and the gesture may include at least one of a flick, a dragging, a click, a tag, a touch, and a touch and hold.

The display controller 102 displays on a display unit, a user interface (UI) having at least one display region including at least one object, and may display a control menu corresponding to a control instruction by the user regarding an input target object.

Further, the display controller 102 may display information input through input unit 101 on a screen or transmit input information to object controller 103.

The display controller 102 controls a state and an overall operation of the display unit and may be configured as a microprocessor or a digital signal processor (DSP).

The object controller 103 hides the target object corresponding to the control instruction input by the user and controls remaining objects to be rearranged that are positioned in the display region.

For example, a method of rearranging the object may include a method of moving the object to a selected display region.

Further, the object controller 103 may control the object to be hidden, which corresponds to the control instruction input by the user.

The object is a menu displayed on the display unit and may include at least one of an icon, a content, a list, and a bar.

The object controller 103 requests input of a password from the user and controls access to the object when there is a request for access to the object by a user.

When an encryption instruction for the target object is input by the user, object controller 103 displays an encryption setup screen on the display unit through the display controller 102, in order to receive input of a password, etc., from the user.

When a decryption instruction on the object is input by the user, object controller 103 displays, on the display unit, the encryption setup screen through display controller 102 and receives input of the password, etc. from the user in order to decrypt the encrypted object.

A different password may be set up with respect to an object in each individual unit. According to an exemplary embodiment, when the user requests access to the object, object controller 103 may individually determine access and decrypt a password.

The authentication unit 104 authenticates a user when a password is encrypted or decrypted with respect to a selected object. That is, when the object is encrypted or decrypted, authentication unit 104 receives authentication information from the user to authenticate the user.

The authentication information may be one of a fingerprint, a password, and a certificate.

For example, to encrypt the object, the user inputs a password through the input unit 101, and the authentication unit 104 authenticates the user through the input password. The object controller 103 controls encryption of the object or implementation of the encrypted object based on an authentication result by the authentication unit 104.

According to an exemplary embodiment, a method of setting up or releasing a password, through the authentication unit 104, with respect to an object, is described below.

When the user selects an object, a menu with respect to the object is displayed on the display unit. When the user selects the menu, a password input screen is displayed. The user inputs a password through the password input screen in order to completely encrypt the object.

When the user selects the object, the password input screen is displayed. The user inputs the password through the password input screen in order to decrypt the object.

In addition to the password input screen, when the user selects the object, a screen to set up access authority, depending on a password, may be further displayed.

According to an exemplary embodiment, there may be further provided a screen which allows the user to input a separate password for each object and to have different authority for access to each object, depending on each password.

The above access authority method, based on the password, may provide, for example, only authority to read an object, and may not provide authority to access an object. Depending on a password, authority may be provided to read and write an object. In addition, depending on an input password, authority to access an object may be set up differently.

Although not illustrated in FIG. 1, object control apparatus 100 according to the present embodiment may further include a memory unit. The memory unit may store operations and states of the object and programs and data used to operate display controller 102 and object controller 103, and may include various components, such as an erasable programmable read only memory (EPROM), a static random access memory (SRAM), or a flash memory. Further, the memory unit may store a password set up for each application program or each data file. When the user sets up an access authority method depending on a password, the memory unit may store the access authority method and the password.

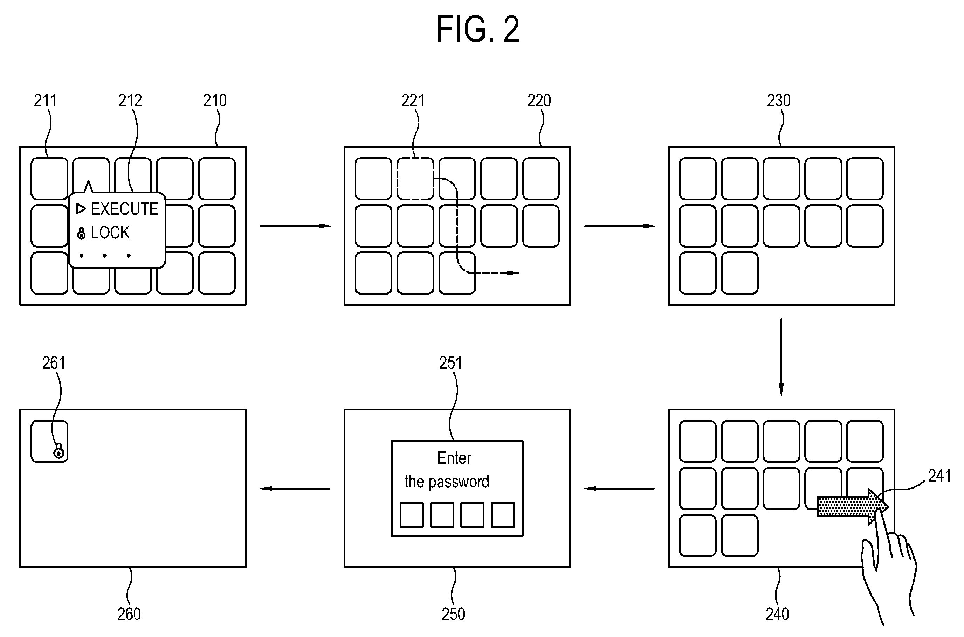

FIG. 2 illustrates an example of a method of controlling an object in an icon displayed in a UI.

A method of encrypting an icon displayed in the UI is described below.

Referring to FIG. 2, a user selects at least one icon through the UI having a display region 210 including at least one icon 211.

In response to the selection of at least one icon, a control menu 212 is displayed over the selected at least one icon. When the user selects the menu, a password input window (not shown) may be displayed. The user inputs a password through the password input window.

Referring to a display region 220 of FIG. 2, icon 221, encrypted after the input of the password, is hidden, as shown in dashed lines, so as not to be shown in display region 220. Unselected icons are rearranged, and hidden icon 221 may be moved to a bottom of display region 220. According to an exemplary embodiment, hidden icon 221 may be moved to a portion of a previously displayed region among other display regions forming the UI, and unselected icons may be rearranged to fill a space formed as selected icon 221 is hidden.

Referring to a display region 230 of FIG. 2, hidden icon 221 is moved to a selected display region and is not displayed in displayed region 230.

When another icon is encrypted, encrypted icons are hidden and moved to a bottom of a display region or a portion of a previously displayed region among the display regions forming the UI. Here, subsequently moved icons may be arranged after the previous icon that was moved.

Alternatively, the hidden icons may be moved to an optional directory or folder.

Referring to display regions 240 to 260 of FIG. 2, a method decrypting previously encrypted icons is described.

A gesture 241 of the user, for example, a touch on the display region 240 followed by a flick to the right using a finger, or a touch on the display region 240 for a predetermined period of time, is received in the display region 240, where the encrypted icons are arranged. A password input window 251 is displayed in the display region 250 corresponding to the input of gesture 241. When a password input by the user is authenticated, an encrypted icon 261 is displayed in the display region 260. Upon receipt of a selection by a user of displayed icon 261, which is displayed in the display region 260, an execution file connected to the selected icon may be implemented.

Alternatively, a different password may be set up for each icon. Also, at least two passwords may be set up for one icon, and authority to access an execution file connected to the icon may be set up differently depending on the respective passwords.

When the encrypted icon is completely implemented, and a gesture is input from the user, an encryption screen may disappear and return to an original screen.

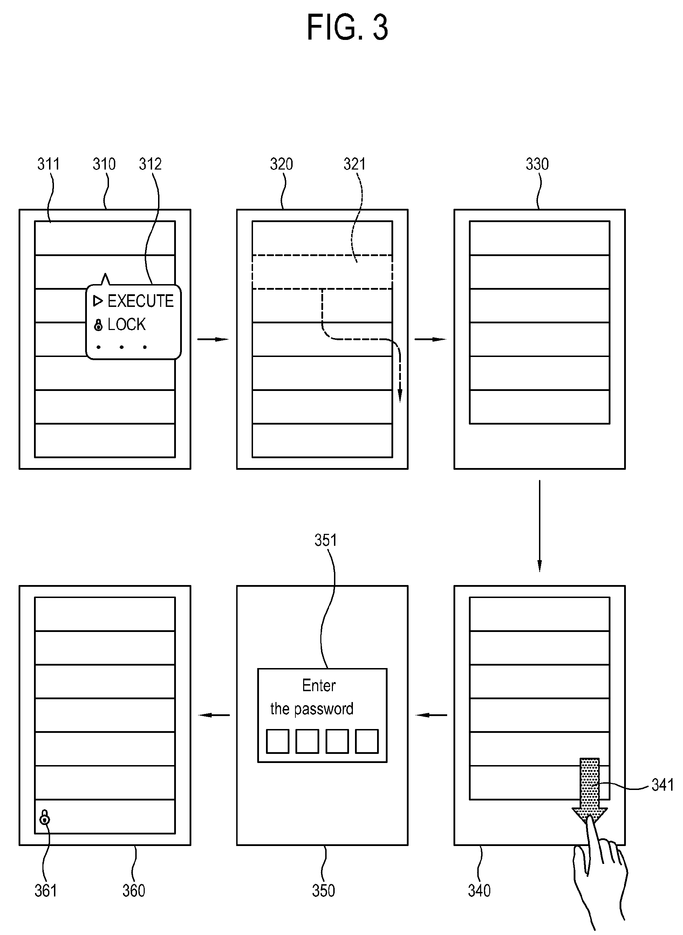

FIG. 3 illustrates an example of a method of controlling an object in a bar displayed, within a UI.

A method of encrypting a bar displayed within the UI is described below.

Referring to FIG. 3, a user selects from the UI having a display region 310, at least one bar 311.

A control menu 312 is then displayed over the selected bar. When the user selects the menu, a password input window (not shown) may be displayed. The user then inputs a password through the password input window.

Referring to a display region 320 of FIG. 3, bar 321, encrypted after the input of the password, is hidden, so as not to be shown in the display region 320 as shown in dashed lines. Unselected bars are rearranged, and the hidden bar 321 may be moved to a bottom of the display region 320. According to an exemplary embodiment, hidden bar 321 may be moved to a portion of a previously displayed region among other displayed regions forming the UI, and unselected bars may be rearranged to fill a space formed as selected bar 321 is hidden.

Referring to a display region 330 of FIG. 3, hidden bar 321 is moved to a selected display region and is not displayed in the display region 330.

As other bars are encrypted, the encrypted bars are hidden and moved to a bottom of a display region or a portion of the last previously displayed region among the display regions forming the UI. Here, the moved bars may be disposed so that the subsequently moved bars are arranged after the previously moved bar.

Alternatively, the hidden bars may be moved to an optional directory or folder.

Referring to exposing regions 340 to 360 of FIG. 3, a method of decrypting encrypted bars is described below.

A gesture 341 of the user, for example, a touch on display region 340 followed by a flick to the right using a finger, or a touch on the display region 340 for a predetermined period of time, is received in the display region 340 where the encrypted bars are arranged. A password input window 351 is displayed in the display region 350 corresponding to input gesture 341. Upon authentication of a password input by a user, an encrypted bar 361 is displayed in the display region 360. Upon receipt from the user of a selection of displayed bar 361, displayed in the exposing region 360, an execution file connected to the selected bar may be implemented.

Alternatively, a different password may be set up for each bar. Also, at least two passwords may be set up for one bar, and authority to access an execution file connected to the bar may be set up differently depending on the respective passwords.

When the encrypted bar 361 is completely implemented, and a gesture is input from the user, an encryption screen may disappear and return to an original screen.

The methods of encrypting the object described with reference to FIGS. 2 and 3 simultaneously hide and move the object to the bottom of the UI so as not to visually expose the object to a third person; and display the encrypted object on a screen, directory, or folder through the UI. Accordingly, a simple UI may be provided.

Further, an encryption function may be set up for an individual object. Thus, the user may conveniently set up encryption with respect to only a desired and necessary function. In addition, since a password may be set up for each object, even if a password for an object is leaked to other people, the user need not worry about other objects which have different passwords.

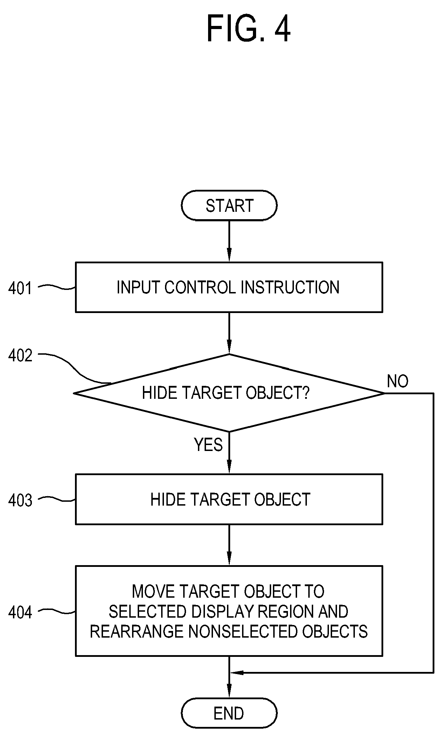

FIG. 4 is a flowchart illustrating a method of encrypting an object according to an exemplary embodiment.

An apparatus using the above-described method of encrypting an object illustrated in FIG. 4, receives selected input from a user of an object displayed on a UI having at least one display region. A control menu based on the selected input of a target object is displayed. A control instruction is input from the user through control menu (401). The control menu may include a selected input list related to locking or implementing the target object.

A determination is made whether to select encryption of the target object through the control menu (402).

When the target object is selected to be encrypted in operation 402, the selected object is hidden (403).

The object hidden in operation 403 is moved to a selected display region and remaining objects are rearranged (404). Operation 404 may include one of situations below.
1) The encrypted object may be moved to a bottom of the display region.
2) The encrypted object may be moved to a portion of a previously displayed region among other display regions forming the UI.
3) The encrypted object may be moved to a directory or folder.

The object moved by one of the above methods may be arranged after a previously encrypted object.

When the target object is determined not to be encrypted in operation 402, the method shown in FIG. 4 terminates.

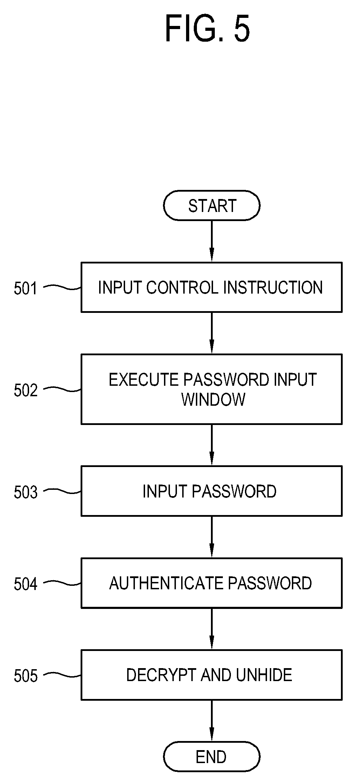

FIG. 5 is a flowchart illustrating a method of implementing an encrypted object according to an exemplary embodiment.

The method of implementing the encrypted object shown in FIG. 5 receives from a user selected input of an object displayed on a UI having at least one display region.

A control instruction is input from the user with respect to the selected object (501). The control instruction may be a gesture of the user in the display region where objects are arranged. For example, the gesture may be a touch on the display region and then a flick to the right using a finger, or a touch on the display region for a predetermined period of time.

A password input window corresponding to the input of the gesture is displayed in the display region (502).

A password is received from the user through the password input window displayed in operation 502 (503).

Authentication unit 104 authenticates the password received from the user in operation 503 (504).

When the password input from the user is authenticated by authentication unit 104 in operation 504, the encrypted object is decrypted and displayed in display region (505).

Upon receipt from the user of a selection of object displayed in the display region, an execution file corresponding to the selectively input object may be implemented.

According to another embodiment, a different password may be set up for each object. Also, at least two passwords may be set up for one object. Authority to access an execution file corresponding to the icon may be set up differently, depending on the respective passwords.

When the encrypted object is completely implemented, and a gesture is then input by the user, an encryption screen may disappear and the display returns to an original screen.

The method for controlling objects of a UI and the apparatus of enabling the method according to the above-described embodiments may be implemented in non-transitory computer-readable media including program instructions to implement various operations embodied by a computer. The media may also include, alone or in combination with the program instructions, data files, data structures, etc. Examples of program instructions include both machine code, such as produced by a compiler, and files containing higher level code that may be executed by the computer using an interpreter.

Although a few exemplary embodiments have been shown and described, it will be appreciated by those skilled in the art that changes may be made in these exemplary embodiments without departing from the inventive concept, the scope of which is defined in the appended claims.

## Claims

1. A method of controlling an object on a touch screen, the method comprising:
displaying a user interface comprising at least one display region including at least one object;
receiving from a user, input of a control instruction, comprising a touch screen gesture, corresponding to a target object hidden from a user;
performing authentication with respect to displaying the target object through an input window displayed in the display region corresponding to the input of the control instruction; and
displaying the target object in a selected display region when the authentication is made.

2. The method of claim 1, wherein the authentication is performed using at least one of a fingerprint of the user, a password, and a certificate.

3. The method of claim 1, wherein the gesture comprises at least one of a flick, a dragging, a click, a tag, a touch, and a touch and hold.

4. The method of claim 1, wherein the selected display region is a previously displayed region of the user interface, and the gesture is a flick on a portion of the previously displayed region or a touch on the portion of the previously displayed region for a predetermined period of time.

5. An apparatus, comprising a touchscreen, the apparatus being arranged to control an object, comprising:
a display controller which displays a user interface comprising at least one display region including at least one object;
an input unit which receives a selection of a target object by a user;
an object controller which receives from the user input unit a control instruction, comprising a touch screen gesture, corresponding to the selected target object; the object controller configured to control display of the selected target object;
an authentication unit which performs authentication with respect to the display of the target object through an input window displayed in the display region corresponding to an input of the control instruction from the user input unit; and
an object implementation unit which implements display of the target object,
the object controller controlling the target object to be displayed in a selected display region based on an authentication result by the authentication unit when the authentication is made by the authentication unit.

6. The apparatus of claim 5, wherein the authentication is performed using at least one of a fingerprint, a password, and a certificate.

7. The apparatus of claim 5, wherein the gesture comprises at least one of a flick, dragging, a click, a tag, a touch, and a touch and hold.

8. The apparatus of claim 5, wherein the selected display region is a previously displayed region of the user interface, and the gesture is a flick on a portion of the previously displayed region or a touch on the portion of the previously displayed region for a predetermined period of time.

## Patentansprüche

1. Verfahren zum Steuern eines Objekts auf einem Touchscreen, wobei das Verfahren Folgendes umfasst:
Anzeigen einer Benutzerschnittstelle, die mindestens eine Anzeigeregion umfasst, die mindestens ein Objekt enthält;
Empfangen, von einem Benutzer, einer Eingabe einer Steueranweisung, die eine Touchscreengeste umfasst, die einem vor einem Benutzer verborgenen Zielobjekt entspricht;
Durchführen von Authentifizierung bezüglich dem Anzeigen des Zielobjekts durch ein Eingabefenster, das in der Anzeigeregion angezeigt wird, die der Eingabe der Steueranweisung entspricht; und
Anzeigen des Zielobjekts in einer ausgewählten Anzeigeregion, wenn die Authentifizierung erfolgt.

2. Verfahren nach Anspruch 1, wobei die Authentifizierung unter Verwendung eines Fingerabdrucks des Benutzers und/oder eines Passworts und/oder eines Zertifikats durchgeführt wird.

3. Verfahren nach Anspruch 1, wobei die Geste mindestens eines aus einem Schnipsen, einem Ziehen, einem Klicken, einem Markieren, einem Berühren und einem Berühren-und-Halten umfasst.

4. Verfahren nach Anspruch 1, wobei die ausgewählte Anzeigeregion eine früher angezeigte Region der Benutzerschnittstelle ist und die Geste ein Schnipsen auf einem Teil der früher angezeigten Region oder ein Berühren auf dem Teil der früher angezeigten Region für eine vorbestimmte Zeitdauer ist.

5. Vorrichtung, die einen Touchscreen umfasst, wobei die Vorrichtung dafür ausgelegt ist, ein Objekt zu steuern, die Folgendes umfasst:
eine Anzeigesteuerung, die eine Benutzerschnittstelle anzeigt, die mindestens eine Anzeigeregion umfasst, die mindestens ein Objekt enthält;
eine Eingabeeinheit, die eine Auswahl eines Zielobjekts von einem Benutzer empfängt;
eine Objektsteuerung, die eine Steueranweisung von der Benutzereingabeeinheit empfängt, die eine Touchscreengeste umfasst, die dem ausgewählten Zielobjekt entspricht; wobei die Objektsteuerung dafür ausgelegt ist, die Anzeige des ausgewählten Zielobjekts zu steuern;
eine Authentifizierungseinheit, die Authentifizierung bezüglich der Anzeige des Zielobjekts durch ein Eingabefenster durchführt, das in der Anzeigeregion angezeigt wird, die einer Eingabe der Steueranweisung von der Benutzereingabeeinheit entspricht; und
eine Objektimplementierungseinheit, die das Anzeigen des Zielobjekts implementiert,
wobei die Objektsteuerung das Zielobjekt steuert, in einer ausgewählten Anzeigeregion angezeigt zu werden, basierend auf einem Authentifizierungsergebnis durch die Authentifizierungseinheit, wenn die Authentifizierung durch die Authentifizierungseinheit erfolgt.

6. Vorrichtung nach Anspruch 5, wobei die Authentifizierung unter Verwendung eines Fingerabdrucks und/oder eines Passworts und/oder eines Zertifikats durchgeführt wird.

7. Vorrichtung nach Anspruch 5, wobei die Geste mindestens eines aus einem Schnipsen, einem Ziehen, einem Klicken, einem Markieren, einem Berühren und einem Berühren-und-Halten umfasst.

8. Vorrichtung nach Anspruch 5, wobei die ausgewählte Anzeigeregion eine früher angezeigte Region der Benutzerschnittstelle ist und die Geste ein Schnipsen auf einem Teil der früher angezeigten Region oder ein Berühren auf dem Teil der früher angezeigten Region für eine vorbestimmte Zeitdauer ist.

## Revendications

1. Procédé de contrôle d'un objet sur un écran tactile, le procédé consistant à :
afficher une interface utilisateur comprenant au moins une région d'affichage comportant au moins un objet ;
recevoir d'un utilisateur une entrée d'une instruction de contrôle, consistant en un geste sur écran tactile, correspondant à un objet cible masqué à un utilisateur ;
effectuer une authentification par rapport à l'affichage de l'objet cible par l'intermédiaire d'une fenêtre d'entrée affichée dans la région d'affichage correspondant à l'entrée de l'instruction de contrôle ; et
afficher l'objet cible dans une région d'affichage sélectionnée une fois l'authentification réalisée.

2. Procédé selon la revendication 1, dans lequel l'authentification est réalisée au moyen d'une empreinte digitale de l'utilisateur, d'un mot de passe et/ou d'un certificat.

3. Procédé selon la revendication 1, dans lequel le geste consiste en un effleurement, un glissement, un clic, un tapotement, un toucher et/ou un toucher prolongé.

4. Procédé selon la revendication 1, dans lequel la région d'affichage sélectionnée est une région préalablement affichée de l'interface utilisateur, et le geste est un effleurement sur une partie de la région préalablement affichée ou un toucher sur la partie de la région préalablement affichée pendant une période prédéterminée.

5. Appareil comprenant un écran tactile, l'appareil étant conçu pour contrôler un objet, comprenant :
un contrôleur d'affichage qui affiche une interface utilisateur comprenant au moins une région d'affichage comportant au moins un objet ;
une unité d'entrée qui reçoit un objet d'un utilisateur ;
un contrôleur d'objet qui reçoit de l'unité d'entrée d'utilisateur une instruction de contrôle, consistant en un geste sur écran tactile, correspondant à l'objet cible sélectionné ; le contrôleur d'objet étant conçu pour contrôler l'affichage de l'objet cible sélectionné ;
une unité d'authentification qui effectue une authentification par rapport à l'affichage de l'objet cible par l'intermédiaire d'une fenêtre d'entrée affichée dans la région d'affichage correspondant à une entrée de l'instruction de contrôle à partir de l'unité d'entrée d'utilisateur ; et
une unité d'implémentation d'objet qui implémente l'affichage de l'objet cible,
le contrôleur d'objet contrôlant l'objet cible à afficher dans une région d'affichage sélectionnée sur la base d'un résultat d'authentification par l'unité d'authentification quand l'authentification est réalisée par l'unité d'authentification.

6. Appareil selon la revendication 5, dans lequel l'authentification est réalisée au moyen d'une empreinte digitale, d'un mot de passe et/ou d'un certificat.

7. Appareil selon la revendication 5, dans lequel le geste consiste en un effleurement, un glissement, un clic, un tapotement, un toucher et/ou un toucher prolongé.

8. Appareil selon la revendication 5, dans lequel la région d'affichage sélectionnée est une région préalablement affichée de l'interface utilisateur, et le geste est un effleurement sur une partie de la région préalablement affichée ou un toucher sur la partie de la région préalablement affichée pendant une période prédéterminée.
